# EUROPEAN PATENT APPLICATION

(11) **EP 1 107 521 A1**
(43) Date of publication of application: **13.06.2001**
(21) Application number: 99850190.2
(22) Date of filing: 06.12.1999
(51) Int. Cl.: H04L 12/56, H04L 29/06

(54) **Method, node and arrangement for routing in Bluetooth network**

(71) Applicant: TELEFONAKTIEBOLAGET LM ERICSSON, 126 25 Stockholm (SE)
(72) Inventor: Rune, Johan, 181 30 Lidingö (SE); Kauppinen, Tero, 02600 Espoo (FI)
(74) Representative: Hytting, Kerstin Cecilia

(57) **Abstract**

The present invention relates to a method, arrangement and node for routing packets within a Bluetooth network. More particularly it relates to the problem of high level routing within Bluetooth networks, requiring a lot of processing overhead and data buffering.

The problem is solved by means of a method for routing a packet, from a first node, via the forwarding node to a second node, within a Bluetooth network.

In the first node, a forwarding indicator and routing information is noted in a header of the Baseband packet. The packet is transferred to the forwarding node which analyses the indicator and the routing information in the Baseband header The packet is forwarded without unpacking and analysing the information of protocol layers higher than the Baseband layer.

## Description

### FIELD OF INVENTION

The present invention relates to a method, arrangement and node in a digital communication system constituting a network of multiple nodes. More specifically the present invention relates to a method, arrangement and node for routing packets within a Bluetooth network.

### DESCRIPTION OF RELATED ART

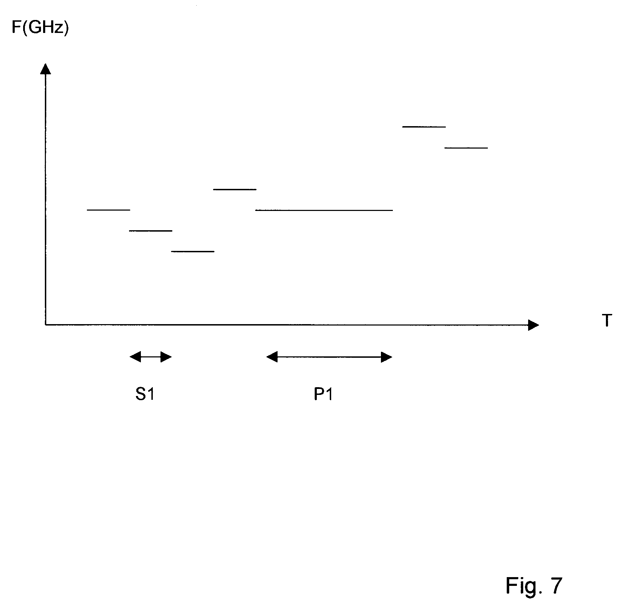

The so-called Bluetooth interface is an example of a modern small short-range radio interface, which was originally intended as a replacement for cables between units. The term Bluetooth is in this disclosure used as an example of usage of short-range radio communication. However, the area of applicability has proven to be much wider. Printers, digital cameras, telephones, laptop computers, video monitors, electronic calendars (PDA), desktops, fax machines, keyboards, joysticks and virtually any other digital device can be part of the short-range radio system, i.e. any of these devices could have certain Bluetooth radio chip and its software. But beyond untethering devices by replacing the cables, the short range radio technology provides a universal bridge to existing data networks, a peripheral interface, and a mechanism to form small private ad hoc groupings of connected devices away from fixed network infrastructures or connected to a fixed network infrastructure via a gateway. Designed to operate in a noisy radio frequency environment, the Bluetooth radio uses a fast acknowledgement and frequency hopping scheme to make the link robust Bluetooth radio modules avoid interference from other signals by hopping to a new frequency after transmitting or receiving a data packet, as is shown in **figure 7**. Compared with other systems operating in the same frequency band, the Bluetooth radio typically hops faster and uses shorter data packets. This makes the Bluetooth radio more robust than other systems. Use of Forward Error Correction (FEC) limits the impact of random noise on long-distance links.

Bluetooth radio is a wireless communication technology using a frequency-hopping scheme in the unlicensed ISM (Industrial Scientific Medical) band at 2,4 GHz. A frequency hop transceiver is applied to combat interference and fading. A shaped, binary FM modulation is applied to minimize transceiver complexity. The gross data rate is 1Mb/s and a TDD (Time-Division Duplex) scheme is used for full-duplex transmission.

The Bluetooth Baseband protocol is a combination of circuit and packet switching. In **figure 7**, S1 denotes one time slot, and P1 denotes a packet covering three time slots. Time slots can be reserved for synchronous packets. Each packet is normally transmitted in a different hop frequency. A packet nominally covers a single slot, but can be extended to cover up to five slots. Bluetooth can support an asynchronous data channel, up to three simultaneous synchronous voice channels, or a channel witch simultaneously supports asynchronous data and synchronous voice. Each voice channel supports 64 kb/s synchronous (voice) link. The asynchronous channel can support an asymmetric link of maximally 721 kb/s in either direction while permitting 57,6 kb/s in the return direction, or a 432,6 kb/s symmetric link.

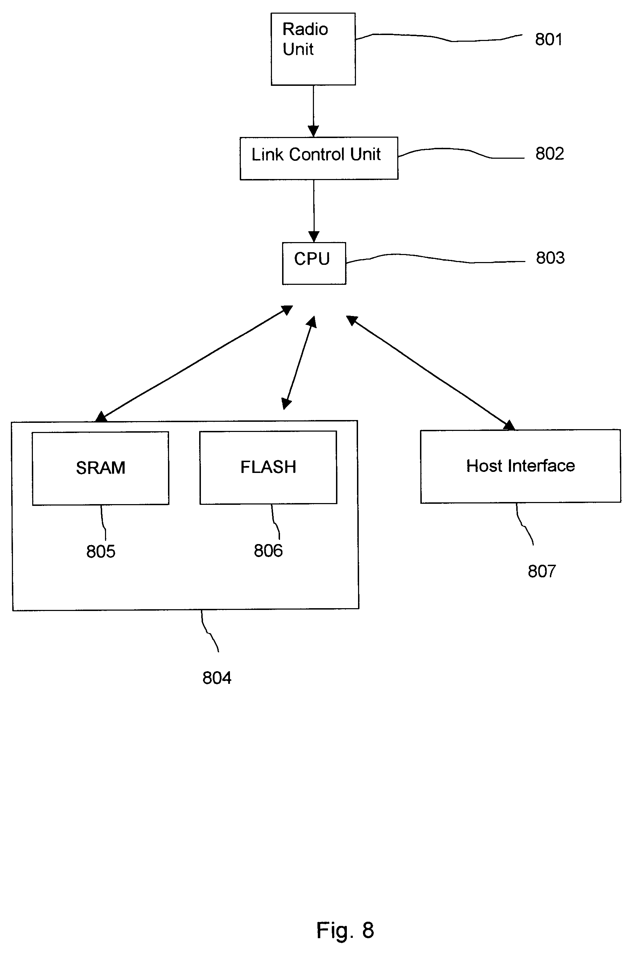

In **figure 8**, the different function blocks of a system using short-range radio transceivers, such as Bluetooth are shown. A radio unit 801 is connected to a link control unit 802 providing the base band. The link control unit 802 is connected to the Central Processing Unit, called CPU, 803 providing the link management. The CPU is connected to the memory 804 providing software functions and consisting of two memory units: a SRAM 805 and a FLASH 806. The CPU 803 is connected to a host interface 807. A SRAM is a fast temporary memory. FLASH is programmable ROM.

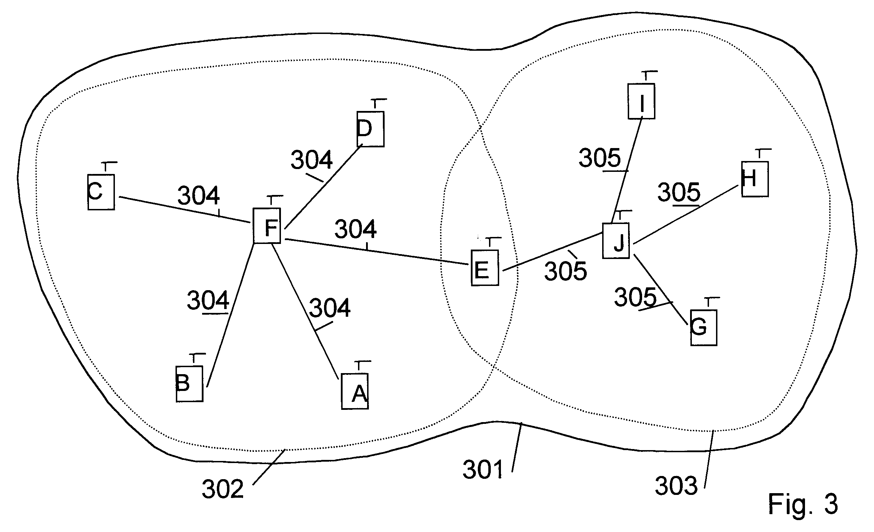

**Figure 3** shows two piconets 302 and 303 constituting a so-called scatternet 301. The piconet 302 includes six radio devices A, B, C and D; and piconet 303 includes five devices E, G, H, I and J. In the piconet 302, device F is a master device. Two or more Bluetooth (BT) units sharing the same channel form a piconet, i.e. a piconet is a collection of devices connected via Bluetooth technology in an ad hoc fashion. Within a piconet a BT unit can have either of two roles: master or slave. Within each piconet there may be only one master, and up to seven active slaves, i.e. a piconet starts with two connected devices, such as portable PC and a cellular telephone, and may grow to eight connected devices. All Bluetooth devices are peer units and have identical implementations. Any BT unit can become master in a piconet However, when establishing a piconet, one unit will act as a master and the other(s) as slave(s) for the duration of the piconet connection. A scatternet, or an ad hoc network, is a network comprising multiple independent and non-synchronized piconets. In this disclosure, a master unit is the device in a piconet whose clock and hopping sequence are used to synchronize all other devices in the piconet. In this disclosure, a slave unit is every device in a piconet that is not the master. Furthermore, two or more piconets can be interconnected, forming a scatternet as depicted in **figure 3**. The connection point between two piconets consists of a BT unit E that is a member of both piconets. A BT unit can simultaneously be a slave member of multiple piconets, but only master in one piconet I.e. a BT unit functioning as master in one piconet can act as a slave in another piconet. A BT unit can only transmit and receive data in one piconet at a time, so participation in multiple piconets has to be on a time division multiplex basis. The Bluetooth system supports both point-to-point and point-to-multi-point connections. Several piconets can be established and linked together ad hoc, where each piconet is identified by a different frequency hopping sequence. All users participating on the same piconet are synchronized to this hopping sequence. The scatternet topology can best be described as a multiple piconet structure, see fig. 8. However, scatternet enabled BT units are not yet commercially available.

**Figure 9a** shows a PDA 901 utilising an "add-on" bluetooth communication device 902. The bluetooth communication device, provided with an antenna, is inserted in a slot in the PDA. The bluetooth communication device may be a PC-card or a compact flashcard provided with the bluetooth chipset.

Fig. 9b shows a PDA utilising a "built-in" bluetooth communication device. Here, the PDA is provided with an antenna.

Fig. 9c shows a mobile telephone utilising a "built-in" bluetooth communication device, the mobile telephone and the bluetooth transceiver having different antennas.

The Bluetooth system provides full-duplex transmission built on slotted Time Division Duplex (TDD), where each slot is 0,625 ms long. The time slots are numbered sequentially using a very large number range (cyclic with a cycle of 2²⁷). Master-to-slave transmission always starts in an even-numbered time slot while slave-to-master transmission always starts in an odd-numbered time slot The term "frame" as used in this disclosure is defined as the combination of an even numbered time slot and its subsequent odd numbered time slot (i.e. a master slave time slot and a slave-to-master time slot, except when multi-slot packets are used). In a communication system using Bluetooth technology there is no direct transmission between slaves in Bluetooth piconet.

The communication within a piconet is organised such that the master polls each slave according to some polling scheme. With one exception a slave is only allowed to transmit after having been polled by the master. The slave will then starts its transmission in the slave-to-master time slot immediately following the packet received from the master. The master may or may not include data in the packets used to poll the slave. The only exception to the above principle is that when a slave has established a so-called SCO link, it is always allowed to transmit in the pre-allocated slave-to-master slot, even if not explicitly polled by the master in the preceding master- to slave slot. The term SCO-link will be disclosed in more details below.

Each BT unit has a globally unique 48-bit IEEE 802 address. Said address, in this disclosure called the Bluetooth Device Address (BD_ADDR), is assigned when the BT unit is manufactured and it is never changed. In addition to this, the master of a piconet assigns a local Active Member Address (AM_ADDR) to each active slave of the piconet. The AM_ADDR, which is only three bits long, is dynamically assigned and de-assigned and is unique only within a single piconet. The master uses the AM_ADDR when polling a slave in a piconet. However, when the slave, triggered by a packet from the master addressed with the AM_ADDR of the slave, transmits a packet to the master, it includes its own AM_ADDR (i.e. not the AM_ADDR of the master which does not exist) in the header of the packet

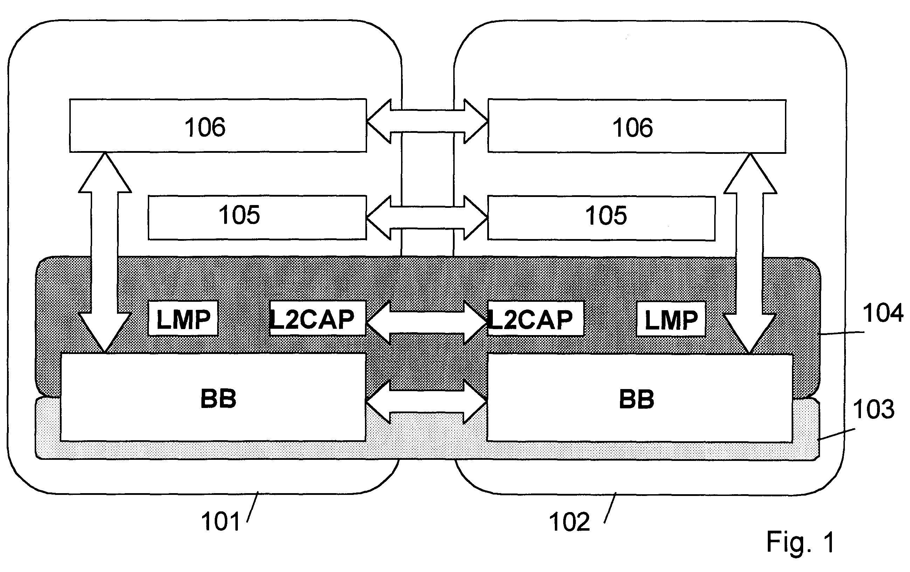

The Bluetooth protocol stack will be described, according to the specifications of the Bluetooth system. The protocol stack, which is depicted in **figure 1**, includes two Bluetooth (BT) units 101 and 102. In the figure the physical layer, 103 and the data link layer, 104 are shown.

### Baseband BB

The Baseband describes the specifications of the digital signal processing part of the hardware - the Bluetooth link controller, which carries the Baseband protocols and other low-level link routines. The Baseband Specification defines two link types: Synchronous Connection-Oriented (SCO) links and Asynchronous Connection-Less (ACL) links. SCO links support real-time voice traffic using reserved bandwidth. ACL links support best effort traffic

### Link Manager Protocol LMP

LMP handles messages used for link set-up, security and control. LMP is layered over the Baseband Protocol and resides in the data link layer 104.

### Logical Link Control and Adaptation Layer Protocol, L2CAP

L2CAP is also layered over the Baseband Protocol and resides in the data link layer 104. L2CAP provides connection-oriented and connectionless data services to upper layer protocols with protocol multiplexing capability, segmentation and reassemble operation, and group abstractions. The L2CAP specification is only defined for ACL links.

### Network Layer 105.

The network layer is currently not specified in the Bluetooth standard. High Level Protocol or application layer 106.

High Level Protocol or application layer may or may not be bluetooth specific.

The BB, LMP and L2CAP represent existing Bluetooth specific protocols, the "Higher level protocol or application" layer 106 represents protocols that may or may not be Bluetooth specific, while the Network layer 105 is currently not specified in the Bluetooth standard.
An additional Bluetooth layer is proposed a so-called Network Adaption Layer NAL, which resides between the data link layer 104, and the network layer 105.

All data is transmitted in packets and the packets can carry both synchronous data and asynchronous data. The synchronous data is transmitted on Synchronous Connection Oriented (SCO) links, mainly intended for voice traffic. Asynchronous data is transmitted on Asynchronous Connectionless (ACL) links. For transmission of an asynchronous data packet, an acknowledgement and retransmission scheme is used to ensure reliable transfer of data.

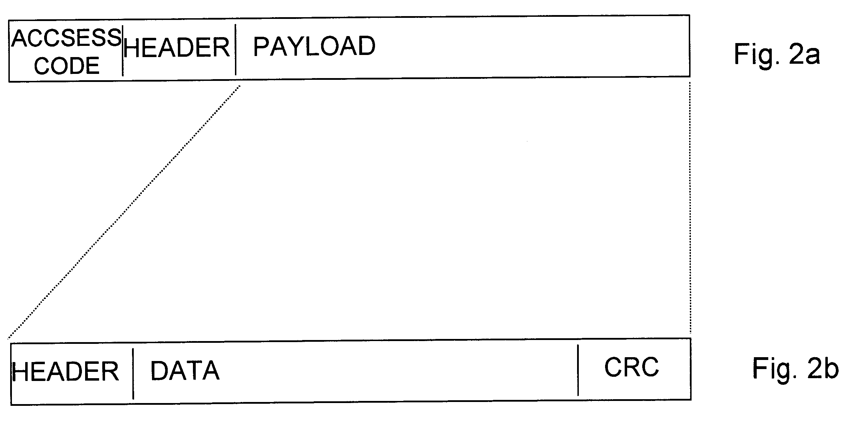

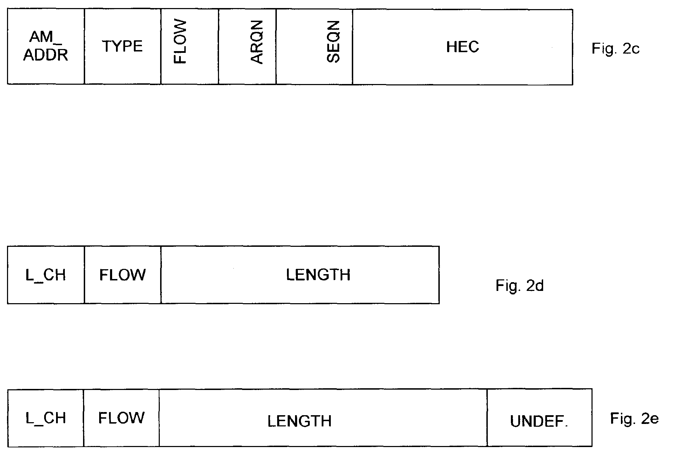

The standard Baseband packet format of Bluetooth, which is shown in **figure 2a**, includes ACCSESS CODE field, HEADER field and PAYLOAD.
The format of the payload depends on the type of packet being transferred. The payload of an SCO packet consists only of a data field. The payload of an ACL packet, which is shown in **figure 2b**, consists of a HEADER, a DATA field and a Cyclic Redundancy Check, CRC.
**Figure 2c** illustrates the format of the Baseband packet header, which includes the address AM_ADDR field, followed by a type TYPE field, indicating the type of packet. The bit in the flow FLOW field is used for flow control, the bits in the ARQN and SEQN fields controls the acknowledgement and retransmission scheme and the bits in the Header Error Check (HEC) field check the integrity of the header. If the HEC indicates an error in the header, the entire packet is discarded.

There are two different formats of the payload header one for single-slot packets depicted in **figure 2d** and one for multi-slot packets, depicted in **figure 2e** the L_CH field indicates the logical channel, The FLOW bit is used for flow control and the LENGTH field indicates the length of the data field. Since multi-slot packets can carry a longer data field, the LENGTH field of the multi-slot payload header is longer than the LENGTH field of the single-slot payload header. In the payload header of the multi-slot packet, the four last bits are UNDEFINED, reserved for future use and should be set to zero.

A limitation of the Bluetooth system is that in the current standard specifications there is no way to address and route packets from one piconet to another. How inter-piconet communication is performed in a scatternet is not specified. However, there are two proposals for how to perform inter-piconet routing and addressing within a scatternet.

One is to use IP for addressing and routing in a scatternet as well as within a piconet. This means that IP takes the place of the network layer in the Bluetooth protocol stack. On the Baseband layer, the AM_ADDR would still be used.

The other alternative is to use a Network Adaption Layer (NAL) between the data link layer and the network layer. This would emulate a shared medium network towards the network layer. Addressing and routing, in a scatternet as well as within a piconet, would be done using the BD_ADDR. On the Baseband layer, the AM_ADDR would still be used.

For both the IP approach and the NAL approach, the actual routing within a scatternet can be performed according to several different routing schemes. These may be ad-hoc routing protocols, specifically designed for the potentially very dynamic topology of wireless ad hoc networks, or traditional routing protocols designed for fixed networks with very slowly changing topology. Examples of ad hoc routing protocols are Ad-hoc On-demand Distance Vector (AODV) and Dynamic Source Routing (DSR). Examples of traditional routing protocols are Distance Vector protocols, e.g. Routing Information Protocol (RIP), and Link State protocols, e.g. Open Shortest Path First (OSPF).

The ad hoc routing protocols, which are the ones most seriously considered for Bluetooth scatternets and also other ad hoc network technologies, create routes on-demand and retain, i.e. cache, them for a certain time period. When a route has been created between source and destination, each packet that is sent along the route includes routing information, originating from the Network layer or NAL layer. In case of AODV, the routing information is the address, e.g. the BD_ADDR or the IP address of the destination node. In case of DSR the entire route, i.e. addresses for each node to be traversed along the way and the destination address, is included in the routing information. These intermediate node addresses may be unique within each piconet, within the scatternet or globally. Other types of routing information are also conceivable, basically anything that enables a packet to be forwarded to its destination. The routing information in a received packet is analysed by an intermediate node before the packet is forwarded to the destination or the next intermediate node.

A problem with the two proposed approaches is that they relay on high level routing in the forwarding nodes of a scatternet. In the IP approach the routing is performed on the IP layer i.e. the Network layer, and in the NAL approach the routing is performed on the NAL layer. Traversing all the lower layer protocols for each packet to be forwarded between two piconets creates a lot of processing overhead in the forwarding node. This processing increases the power consumption which always must be kept at a minimum in portable battery-powered units, takes time, which is also a scare resource, and steels processing power from other tasks in the BT unit. Traversing all the lower layer protocols for each packet to be forwarded also means that a substantial amount of data may have to be buffered in a forwarding node, since potentially large higher layer packets have to be reassembled before forwarding can take place.

Therefore a method of routing packets at lower layers within a scatternet is required.

### SUMMARY OF THE INVENTION

The present invention relates to the requirement of low layer routing in a Bluetooth network. More particularly it relates to the problem of high level routing within Bluetooth networks, requiring a lot of processing overhead and buffering.

Accordingly, it is an object of the present invention to unravel the abovementioned problem.

The aforesaid problem is solved by means of a method for Baseband level routing of a packet within a Bluetooth network by including routing information in a header of a Baseband packet.

The following scenario of routing a packet, from a first node, via the forwarding node to a second node, within a Bluetooth network, describes the inventive concept of the present invention.

In the first node, a forwarding indicator and routing information is noted in a header of the Baseband packet. The packet is transferred to the forwarding node which analyses the indicator and the routing information in the Baseband header The packet is then forwarded without unpacking and analysing the information of protocol layers higher than the Baseband layer.

An advantage of the present invention is that routing of packets in a Bluetooth scatternet can be performed without traversing all the protocol layers up to the NAL layer or the Network layer.

Another advantage of the present invention is that buffering in the forwarding nodes is reduced. Since the forwarding is performed on the Baseband layer, i.e. Baseband packets are forwarded, and the forwarding node does not have to buffer Baseband packets for the purpose of reassembling higher layer packets.

Another advantage of the present invention is that fragmented L2CAP packets to be forwarded can be multiplexed on a single link when sent to the forwarding node, since the fragmented L2CAP packet does not have to be reassembled in a forwarding node. Otherwise all fragments of an L2CAP packet have to be transferred in an uninterrupted sequence.

Another advantage of the present invention is that the processing in the forwarding nodes are reduced implying that the power consumption is reduced, which is important for battery powered portable units.

Another advantage of the present invention is that less time is needed for process the forwarding.

Yet another advantage is that the invention can be used in conjunction with existing proposals for Bluetooth routing on higher layers.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Figures 1-2e and 7-9c are described above under "Description of related art".
- Figure 1: is a diagram showing the Bluetooth protocol stack.
- Figure 2a: is a diagram showing the standard Baseband packet format.
- Figure 2b: is a diagram depicting the payload of an ACL packet.
- Figure 2c: is a diagram illustrating the format of the Baseband packet header.
- Figure 2d: is a diagram showing the payload header for single-slot packets.
- Figure 2e: is a diagram showing the payload header for multi-slot packets.
- Figure 3: is a schematic view illustrating a possible scenario of the present invention.

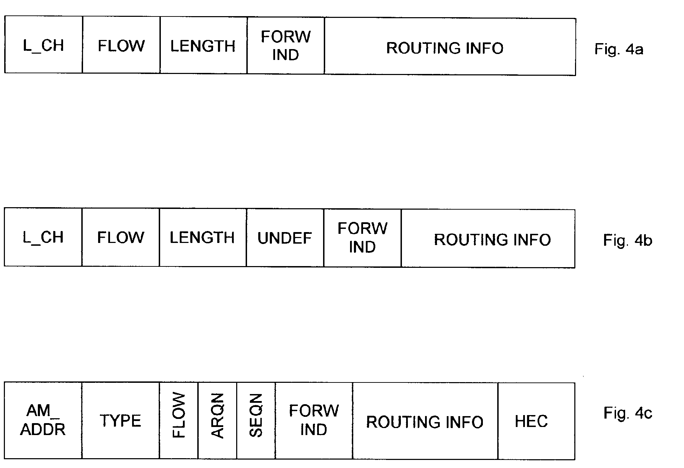

- Figure 4a: is a diagram showing the Baseband payload header format for a single-slot packet according to the invention.
- Figure 4b: is a diagram showing a Baseband payload header format for a multi-slot packet according to the invention
- Figure 4c: is a diagram showing a Baseband packet header format according to the invention.

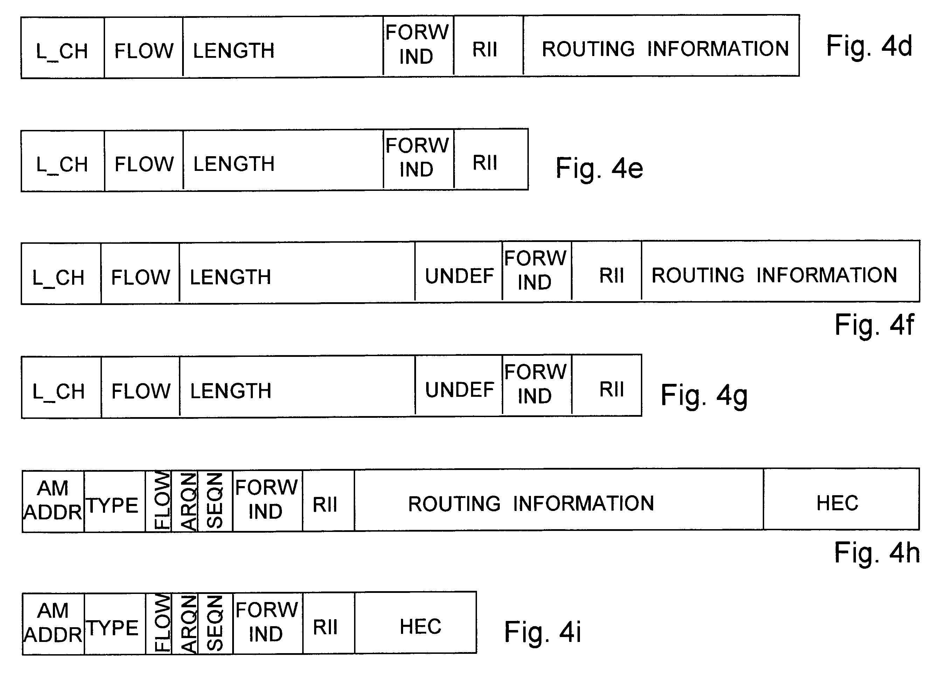

- Figure 4d: is a diagram showing a Baseband payload header format for a single-slot packet according to the invention.
- Figure 4e: is a diagram showing a Baseband payload header format for a single-slot packet according to the invention.
- Figure 4f: is a diagram showing a Baseband payload header format for a multi-slot packet according to the invention.
- Figure 4g: is a diagram showing a Baseband payload header format for a multi-slot packet according to the invention
- Figure 4h: is a diagram showing a Baseband packet header format according to the invention
- Figure 4i: is a diagram showing a Baseband packet header format according to the invention

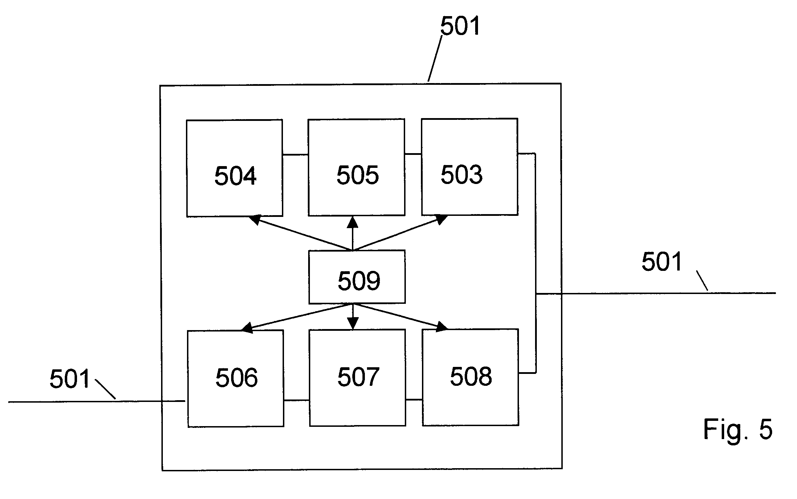

- Figure 5: is a diagram showing a node in a Bluetooth network according to the present invention.

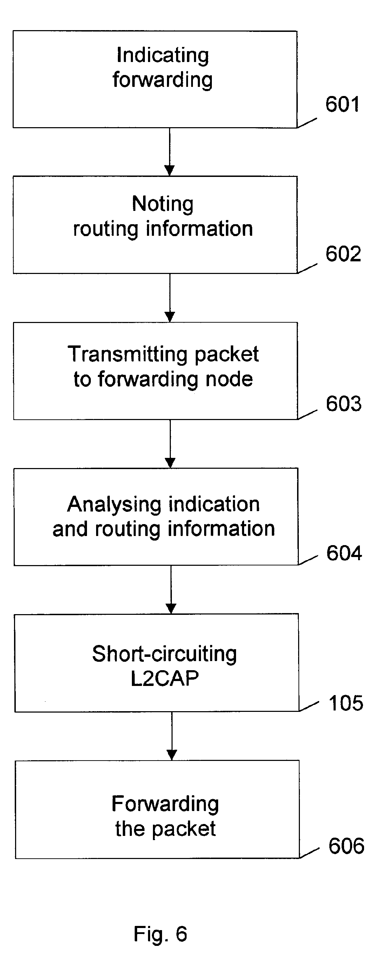

- Figure 6: shows a flowchart of the method according to the invention.
- Figure 7: is a diagram showing the relationship between time slots and frequency hops in a system using Bluetooth.
- Figure 8: is a diagram illustrating the different function blocks of a Bluetooth system.

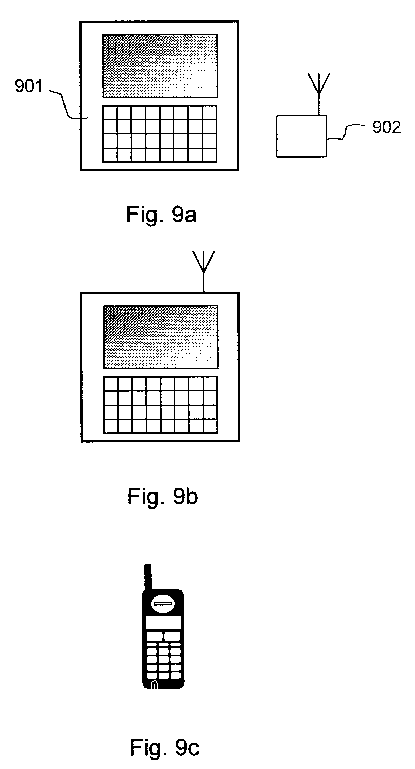

- Figure 9a-c: shows a schematic view of three electronic devices provided with a Bluetooth-transceiver.

### DESCRIPTION OF PREFFERED EMBODIMENTS

Figures 1-2e and 7-9c are figures related to Prior Art and are described under "Description of related art".

In addition to the previously described forwarding nodes, i.e. nodes that are connected to more than one piconet, also the master node of each piconet may or may not be regarded as a forwarding node. This depends on the routing protocol that is used, in particular within a piconet, i.e. intra-piconet routing. In the following description, the master nodes are regarded as forwarding nodes.

**Figure 3** shows a possible scenario of the present invention. A Bluetooth network 301 includes two piconets. The first piconet 302 includes multiple nodes A, B, C, D, E and F whereof one node, a so-called master, constitutes a forwarding node F, forwarding packets between slaves, and the other nodes A, B, C, D and E, constitutes slaves. The second piconet 303 includes multiple nodes E, G, H, I and J whereof one node, a so-called master, constitutes a forwarding node J, and the other nodes E, G, H and I, constitutes slaves The respective slaves A, B C and D are communicating with the master F over radio links 304. The respective slaves E, G, H and I are communicating with the master J over radio links 305. The slave E constitutes a slave in both the first piconet 302 and the second piconet 303, and acts as a forwarding node E, when transferring packets between the first piconet 302, and the second piconet 303. The Bluetooth network 301 thus includes three forwarding nodes F, E and J. F and J since they are master nodes and E since it is connected to two piconets.
Within the network, a Baseband packet is transferred. Data from a sequence, which is intended to be transferred, is encapsulated in one or more Network layer packets. If a NAL layer is used, a Network layer packet is encapsulated in a NAL packet. A Network or NAL layer packet is encapsulated in a L2CAP packet. The L2CAP packet is encapsulated in one or more Baseband packets. Each Baseband packet has a header, as shown in figure 2a and 2b. The master F controls all the communication within the first piconet 302 and the master J controls all the communication within the second piconet 303. According to the invention, a Baseband packet shall be routed from a first node A, via the forwarding nodes F, E and J, to a second node G.

To perform the transmission of the packet, a route is created between first node A and second node G, by the routing protocol on the NAL or Network layer, each packet that is sent along the route includes routing information, originating from the Network layer or NAL layer. In case of using the routing protocol AODV, the routing information is the address of the destination node, which in this case is the second node G. In case of using the routing protocol Dynamic Source Routing (DSR) the routing information includes the addresses for each node to be traversed along the way and the destination node, which in this case is the address of the respective nodes F, E, J and G.
To perform the packet transmission in the Baseband layer, the routing information, is placed in a header of a lower protocol, i.e. in the Baseband payload header implying a short-circuiting of the L2CAP layer, or alternatively in the Baseband packet header, implying a short-circuiting of both the Baseband payload sublayer and the L2CAP layer. By short-circuiting a protocol layer is meant that the forwarding node does not have to unpack and analyse the information of that protocol layer in order to forward the packet.

In both alternatives the extension of the respective header would consist of a forwarding indicator and relevant routing information.
**Figure 4a and 4b** shows the Baseband payload header format for single-slot and for multi-slot packets respectively, according to the invention. In **figure 4c** the Baseband packet header format, according to the invention, is shown. In the figures 4a-c the headers are extended with the forwarding indicator FORW IND field and relevant routing information ROUTING INFO field.
The forwarding indicator instructs a forwarding node whether the packet should be forwarded or passed to higher layer protocols within the node. If the forwarding indicator is not set, e.g. =0, the packet should be passed to upper layer protocols within the forwarding node. If the forwarding indicator is set, e.g. =1, the forwarding node should invoke a forwarding within the lower layer. In this case the forwarding indicator is set. The forwarding indicator set also indicates that it is followed by routing information required to forward the packet. If the forwarding indicator is not set, no routing information is included. Alternatively the routing information is still included, indicating to the receiving node is the destination node implying that the packet is to be passed upwards to higher layer protocols.

This low-level routing mechanism is applicable to user data packets sent along an already established route. The message used to create the route in the first place, e.g. a NAL or a Network layer message, can not use the above-disclosed procedure.

On the NAL or network layer, the packets may be much larger than on the Baseband layer. The NAL or Network layer packets will probably fit into a single L2CAP packet, but the L2CAP packets may often have to be segmented before they are transferred in multiple Baseband packets. Including the routing information in every Baseband packet instead of only in the NAL or Network layer packet increases the overhead.
In one embodiment of the present invention, one or more L2CAP packets including data from the same sequence from the same sequence and being forwarded to the same destination, are segmented into multiple Baseband packets. The multiple Baseband packets constitute a first Baseband packet comprising the first segment of the L2CAP packet and subsequent Baseband packets, each comprising the respective subsequent segment of the L2CAP packet.

In one alternative the forwarding indicator is set and routing information noted in both the first and the subsequent Baseband packets respectively.

In another alternative, the forwarding indicator is set and the routing information is noted in the first Baseband packet but in the subsequent Baseband packets no routing information is included. In this alternative the forwarding indicator within the first Baseband packet also instructs the forwarding nodes F, E and J to store the routing information of the first Baseband packet and associate the routing information with the incoming link, i.e. the link on which the first Baseband packet is received by the forwarding node E and on which also the subsequent Baseband packets will be received by the forwarding node E. The forwarding indicator has to be complemented with yet a one-bit indicator, which is, called Routing Information Indicator (RII). The RII is included only when the forwarding indicator is set. The purpose of the RII is to indicate whether or not the routing information is actually included after the forwarding indicator. For the first Baseband packet the RII is set, e.g. =1, indicating that the routing information is present.
In the subsequent Baseband packets respectively the forwarding bit is set, the RII is cleared, e.g. =0, indicating that no routing information is present. Then the forwarding nodes F, E and J should use the latest received routing information to forward the subsequently received Baseband packets, until new routing information is received in a Baseband packet.

**Figure 4d and 4e** show a single-slot Baseband payload header format according to the invention, for a first Baseband packet comprising routing information, figure 4d , and for a subsequent Baseband packet with no routing information included, figure 4e. **Figure 4f and 4g** show a multi-slot Baseband payload header format according to the invention, for a first Baseband packet comprising routing information, figure 4f, and for a subsequent Baseband packet with no routing information included, figure 4g. In figure 4h and 4i is a Baseband packet header format according to the invention shown, for a first Baseband packet comprising routing information, figure 4h, and for a subsequent Baseband packet with no routing information included, figure 4i. In the figures 4d-i the headers are extended with the RII field.

In **figure 5** a node 501 in a Bluetooth network is shown. As nodes in Bluetooth networks it can act as a slave or a master within a piconet. It can also constitute a connection point between two or more piconets constituting a scatternet and thereby be a node that is a member of two or more piconets. In that case it constitutes a forwarding node. The node is communicating with other nodes within the scatternet over radio links 502. The node 501 has means 503 for transmitting Baseband packets, on a Baseband layer, to other node(s) within the piconet or to a forwarding node within a scatternet. The node 501 has means 504 for indicating in a header of a Baseband packet that a packet should be forwarded and means 505 for noting relevant routing information in a header of the Baseband packet. To act as a forwarding node, the node 501 has means 506 for analysing the indication and the routing information in a received packet and means 507 for short-circuiting the Logical Link Control and Adaptation Layer Protocol (L2CAP) layer of a received packet. The node has further means 508 for forwarding a packet to another node within the scatternet according to the routing information. The node includes a digital computer having an internal memory for storing a computer program 509

**Figure 6** shows a flowchart of a possible scenario of routing a packet from a first node A via a forwarding node E to a second node G within the Baseband layer of a Bluetooth network. The Bluetooth network includes of multiple nodes.

The method includes the following steps:
- 601: The first node A indicates that the packet should be forwarded in a header of the Baseband packet.
- 602: The first node A notes relevant routing information in the header of the Baseband packet.
- 603: The first node A then transmits the packet to the forwarding node E.
- 604: The forwarding node E analyses the indication and the routing information of the received Baseband packet.
- 605: The forwarding node E short-circuits the Logical Link Control and Adaptation Layer Protocol (L2CAP) layer of the packet.
- 606: The forwarding node E forwards the packet to the destination node, i.e. the second node G, according to the routing information.

The method is implemented by means of a computer program product comprising the software code portions for performing the steps of the method. The computer program product is run on a computer stored in a digital computer within a node of the Bluetooth network.
The computer program is loaded directly or from a computer usable medium, such as floppy-disc, CD, Internet etc.

## Claims

1. Method for routing a packet within a Bluetooth network from a first node via a forwarding node to a second node, the packet having a first representation on a Baseband layer as a Baseband packet and a second representation on a Logical Link Control and Adaptation Layer Protocol, L2CAP, layer as a L2CAP packet, the L2CAP layer receding on a higher layer than the Baseband layer, the method comprising the steps of :
*indicating* (601) in a header of the Baseband packet that the packet should be forwarded;
*noting* (602) relevant routing information in a header of the Baseband packet;
*transmitting* (603) the packet from the first node to the forwarding node ;
*analysing* (604) the indication and the routing information;
*short-circuiting* (605) the L2CAP layer of the packet;
*forwarding* (606) the packet to the second node (G) according to the routing information.

2. Method according to the previous claim, wherein one or more L2CAP packets, including data from the same sequence and being forwarded to the same destination, are segmented into multiple Baseband packets which constitute a first Baseband packet comprising the first segment of the L2CAP packets respective subsequent Baseband packets, each Baseband packet comprising the respective subsequent segment of the L2CAP packets, the method comprising the further step of:
*including* in a header of the first Baseband packet, an indication of that the forwarding node shall store the routing information of the first Baseband packet and associate the routing information with the incoming link.

3. Method according to the previous claim, comprising the further step of:
*setting* a Routing Information Indicator RII in the header of the first Baseband packet, the set RII indicating that the routing information is present.

4. Method according to the previous claim, comprising the further steps to be taken by the forwarding node after receiving the first Baseband packet,:
*storing* the relevant routing information in a memory of the forwarding node; and
*associating* the relevant routing information with the incoming link on which the Baseband packet was received.

5. Method according to the previous claim, comprising the further step to be taken by the first node, after transmitting the first Baseband packet:
*excluding* the routing information from a header of a subsequent Baseband packet.

6. Method according to the previous claim, comprising the further steps of:
*clearing* the RII in the header of the subsequent Baseband packet which indicates that no routing information is present; and
*transmitting* the subsequent Baseband packet to the forwarding node.

7. Method according to the previous claim, comprising the further steps to be taken by the forwarding node when the subsequent Baseband packet is received:
*analysing* a header of the subsequent Baseband packet; and
*forwarding* the subsequent Baseband packet to the second node, according to the stored routing information of the first Baseband packet.

8. Method according to any of the claims 1-7, wherein the header constitutes the Baseband packet header.

9. Method according to the previous claim, comprising the further step to be taken by the forwarding node:
*short-circuiting* the Baseband payload sublayer.

10. Method according to any of the claims 1-7, wherein the header constitutes the Payload header of the Baseband packet.

11. A computer program product directly loadable into the internal memory of a digital computer within a node being a member of a Bluetooth communication network, comprising the software code portions for performing the steps of any of the claims 1-10, when said product is run on a computer.

12. A computer program product stored on a computer usable medium, comprising readable program for causing a computer, within a node being a member of a Bluetooth communication network, to control an execution of the steps of any of the claims 1-10.

13. A Bluetooth network comprising a first node, a second node, at least one forwarding node, and a packet to be transferred, the packet having a first representation on a Baseband layer as a Baseband packet and a second representation on a Logical Link Control and Adaptation Layer Protocol, L2CAP, layer as a L2CAP packet, the L2CAP receding on a higher layer than the Baseband, **characterised** by
- the first node having means for indicating in a header of the Baseband packet that the packet should be forwarded;
- the first node having means for noting relevant routing information in a header of the Baseband packet;
- the first node having means for transmitting the packet to the forwarding node;
- the forwarding node having means for analysing the indication and the routing information;
- the forwarding node having means for short-circuiting the L2CAP layer of the packet; and
- the forwarding node having means for forwarding the packet to the second node according to the routing information.

14. Bluetooth network according to the previous claim, wherein one or more L2CAP packets, including data from the same sequence and being forwarded to the same destination, are segmented into multiple Baseband packets, constituting a first Baseband packet, comprising the first segment of the L2CAP packets and subsequent Baseband packets, each comprising the respective subsequent segment of the L2CAP packets **characterised** by the first node having means for including in a header of a first Baseband packet, an indication of that the forwarding node shall store the routing information of the first Baseband packet and associate the routing information with the incoming link.

15. Bluetooth network according to the previous claim, **characterised** by the first node having means for setting a Routing Information Indicator, RII, in the header of the first Baseband packet, the set RII indicating that routing information is present.

16. Bluetooth network according to the previous claim, **characterised** by the forwarding node having means for storing the relevant routing information in a memory.

17. Bluetooth network according to the previous claim, **characterised** by the forwarding node having means for associating the relevant routing information with the incoming link.

18. Bluetooth network according to the previous claim, **characterised** by the first node having means for excluding the routing information from a header of a subsequent Baseband packet.

19. Bluetooth network according to the previous claim, **characterised** by the first node having means for clearing the RII in the header of the subsequent Baseband packet which indicates that no routing information is present.

20. Bluetooth network according to the previous claim, **characterised** by the forwarding node having means for forwarding the subsequent Baseband packet to the second node, according the stored routing information of the first Baseband packet.

21. Bluetooth network according to any of the claims 13-20 **characterised** by the header constituting the Baseband packet header.

22. Bluetooth network according to the previous claim **characterised** by the forwarding node having means for short-circuiting the Baseband payload sublayer.

23. Bluetooth network according to any of the claims 13-20 **characterised** in that the header constitutes the Payload header of the Baseband packet.

24. A node (501) within a Bluetooth network for transmitting and routing packets, the packets the packet having a first representation on a Baseband layer as a Baseband packet and a second representation on a Logical Link Control and Adaptation Layer Protocol, L2CAP, layer as a L2CAP packet, the L2CAP receding on a higher layer than the Baseband, **characterised** by the node having means for:
- indicating (504) in a header of a Baseband packet that a packet should be forwarded;
- noting (503)relevant routing information in a header of a Baseband packet;
- transmitting (502) a packet to a forwarding node;
- analysing (506) the indication and the routing information in a received packet;
- short-circuiting (507) the Logical Link Control and Adaptation Layer Protocol, L2CAP, layer of a received packet; and
- forwarding (508) a packet to a second node according to the routing information.

25. Node (501) according to the previous claim, wherein one or more L2CAP packets, including data from the same sequence and being forwarded to the same destination, are segmented into multiple Baseband packets, constituting a first Baseband packet, comprising the first segment of the L2CAP packets and subsequent Baseband packets, each comprising the respective subsequent segment of the L2CAP packets **characterised** by the node having means for including in a header of the first Baseband packet, indication of that a forwarding node shall store the routing information of the first Baseband packet and associate the routing information with the incoming link.

26. Node (501) according to the previous claim, **characterised** by having means for setting a Routing Information Indicator, RII, in a header of the first Baseband packet, the RII indicating that routing information is present.

27. Node (501) according to the previous claim 21, **characterised** by after receiving a packet comprising routing information, having means for storing the routing information in a memory.

28. Node (501) according to the previous claim, **characterised** by having means for associating the routing information with the incoming link.

29. Node (501) according to the previous claim, **characterised** by having means for excluding from a header of a subsequent Baseband packet the routing information.

30. Node (501) according to the previous claim, **characterised** by having means for clearing the RII in the header of the subsequent Baseband packet, which indicates that no routing information is present.

31. Node (501) according to the previous claim, **characterised** by having means for forwarding the subsequent Baseband packet, according to a stored routing information of a first Baseband packet, to a node within the Bluetooth network.

32. Node (501) according to any of the claims 24-31 **characterised** by the header constituting the Baseband packet header.

33. Node (501) according to the previous claim **characterised** by the forwarding node having means for short-circuiting the Baseband payload sublayer.

34. Node (501) according to any of the claims 24-31 **characterised** in that the header constitutes the Payload header of the Baseband packet.
